# EUROPEAN PATENT APPLICATION

(11) **EP 0 904 982 A2**
(43) Date of publication of application: **31.03.1999**
(21) Application number: 98306257.1
(22) Date of filing: 05.08.1998
(51) Int. Cl.: B60Q 1/14, B62J 6/20, B62J 6/00

(54) **Automatic vehicle lighting**

(30) Priority: 05.08.1997 GB 9716583
(71) Applicant: Ford, Simon John, Windsor, Berkshire SL4 5NH (GB)
(72) Inventor: Ford, Simon John, Windsor, Berkshire SL4 5NH (GB)
(74) Representative: Geary, Stuart Lloyd

(57) **Abstract**

A lighting unit (1) for a bicycle detects the passage of magnet (4) mounted to a spoke (5) of a wheel. A light sensor (7) is provided for sensing ambient light. If the ambient light level is low, the lighting unit (1) automatically turns on a light if movement of the magnet (4) is detected (4). Additional light sources are turned on if the speed of the wheel is determined to be reducing.

## Description

The present invention relates to an automatic lighting system for a wheeled vehicle comprising a power supply and a light source and a method of controlling a light on a wheeled vehicle.

For reasons of safety, human-powered vehicles, such as bicycles, are required to have lights when used at night. Lighting systems for bicycles come in two main forms. The first form comprises self-contained battery-powered light units that can be mounted to a bicycle's frame. The other form comprises lamps, mounted to a bicycle's frame, that are powered by a dynamo. The dynamo is typically mounted in the hub of the rear wheel or clamped to the bicycle frame so that a driving wheel frictionally engages the rear tyre of the bicycle. Rotation of the bicycle's rear wheel drives the drive wheel of the dynamo.

A problem with battery powered lamps is that the user must remember to switch them off after use of face the possibility of running down the batteries unnecessarity.

It is an aim of the present invention to overcome this problem.

A system according to the present invention, is characterised by a non-contact sensor for sensing rotation of a vehicle wheel and control means for applying power from the power source to the light source in dependence on the output of the sensor. The control means may comprise analogue circuitry or, more preferably, a microcontroller or a microprocessor. The non-contact sensor is to be distinguished from a hub dynamo which is not a sensor as such.

Although it is desirable that the lights be extinguished automatically. Immediately extinguishing the lights can be hazardous as the rider may merely have halted at a junction rather than be at the end of his journey. To solve this subsidiary problem, a timer is preferably included and triggered by an output from the sensor indicating cessation of wheel rotation. The control means in this case is configured to be responsive to the timer to maintain the application of power to the light source for a predetermined period after cessation of wheel rotation. Thus, if the vehicle stops, any operating lights are not immediately extinguished. If the control means comprises a microcontroller or a microprocessor, the timer may also be embodied by the microcontroller or microprocessor

Human-powered vehicles are typically provided with a headlight and a tail light. However, unlike motor vehicles, they are not provided with a brake light. To indicate that he is slowing, a cyclist is required, in the United Kingdom at least, to extend his right arm and wave it up and down. In the dark, this signal may be missed by other road users. To solve this problem, the present invention provides control means configured to apply power to the light source when the output of the sensor indicates reducing wheel rotational speed. Thus, a light is turned on when the vehicle is slowing.

Preferably, a predetermined rate of deceleration must be achieved before the light source is powered.

The lighting is, of course, not required during daylight. To further prevent the unnecessary running down of the power supply, an ambient light sensor is preferably included and the control means is configured to be responsive to the ambient light sensor to apply power to the light source only when the ambient light level indicated by the ambient light sensor falls below a predetermined level. The ambient light sensor means that the vehicle's user does not need to remember to turn on the lighting system when night falls.

Conveniently, the light source comprises a plurality of light emitting diodes. However, an incandescent lamp or a flourescent lamp could be used. Small halogen lamps provide excellent alternatives to light emitting diodes.

Preferably, the non-contact sensor comprises a magnetic sensor. However, an optical sensor could be used. Such a sensor could comprise a light emitter and a light sensor for sensing light reflecting from spokes, other reflective rotating wheel parts or special reflectors attached to a wheel. The magnetic sensor preferably comprises a permanent magnet and mounting means configured for mounting the permanent magnet to a wheel, for instance to a spoke of a wire-spoked wheel. A plurality of magnets may be evenly spaced about the wheel. An alternative magnetic sensor would sense spokes passing through a magnetic field stationary relative to the vehicle.

Preferably, a housing is provided to contain the power supply, the light source, at least part of the non-contact sensor and the control means. More preferably, fixing means configured for fixing the housing to a fork of a bicycle is provided.

The present invention is particularly suited to bicycles, tricycles and the like.

A method according to the present invention, is characterised by monitoring the rotation of a wheel of the vehicle using a non-contact sensor and powering a light on the vehicle if the output of the sensor meets a predetermined criterion.

The criterion may comprise a signal characteristic of rotation of the wheel. The criterion or another criterion may comprise a signal charateristic of wheel rotation having ceases within a predetermined preceding period. Optionally, the criterion comprises a signal characteristic of reducing wheel rotational velocity.

An embodiment of the present invention will now be described, by way of example, with reference to the accompanying drawings, in which:-
Figure 1 is a side view of an embodiment of the present invention mounted to a bicycle;
Figure 2 is a rear view of the embodiment of Figure 1;
Figure 3 is a cross-sectional view looking forwards of the housing shown in Figure 1;
Figure 4 is a circuit diagram of the embodiment shown in Figure 1; and
Figure 5 is a flow chart illustrating the operation of the embodiment shown in Figure 1.

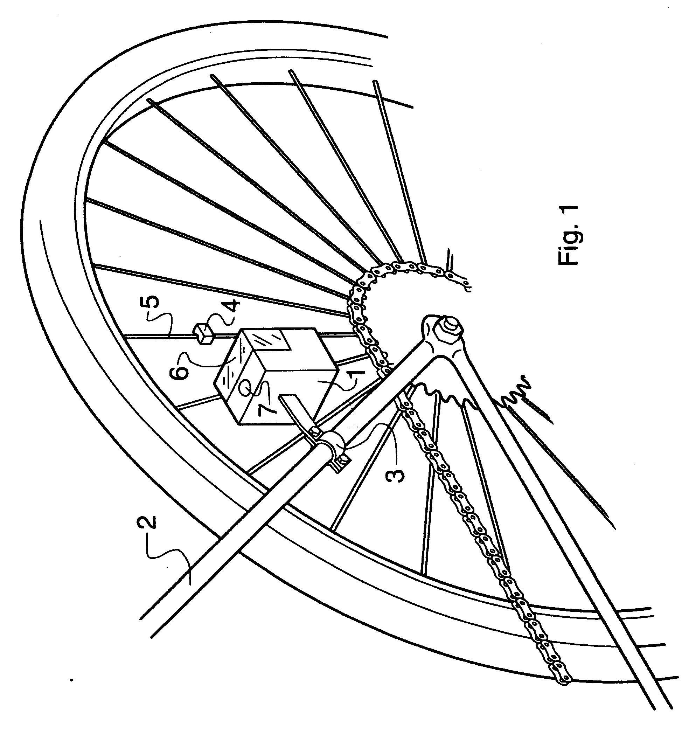

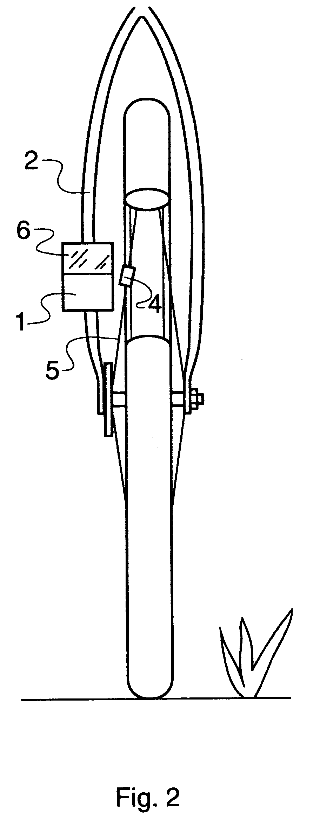

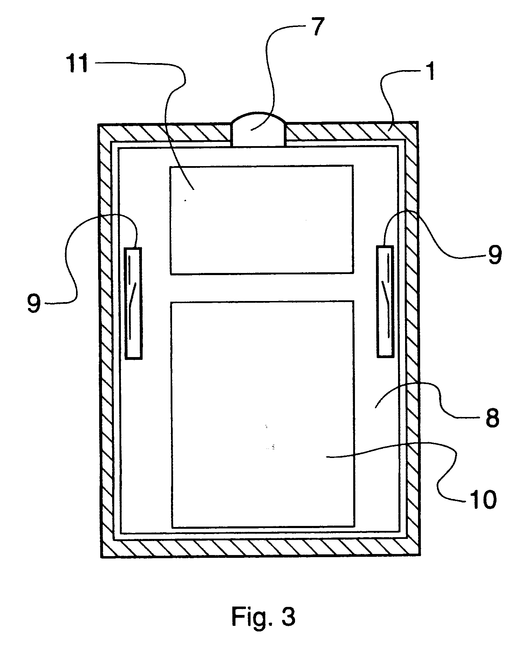

Referring to Figures 1 and 2, a housing 1 is mounted to a rear fork member 2 of a bicycle by a clamp 3. A small magnet 4 is clipped to a spoke 5 of the bicycle's rear wheel. The magnet 4 is positioned so that is sweeps past the housing 1, and more particularly a reed switch within the housing, on each revolution of the wheel to which it is mounted. A plurality of light emitting diodes are mounted behind a transparent red cover 6 at the rear of the housing 1. A light dependent resistor 7 is mounted to the top of the housing 1 (see Figure 3 also).

Referring to Figure 3, a circuit board 8 is mounted to the inside of the front wall of the housing 1 opposite the red cover 6. Reed switches 9 are mounted to opposite margins of the circuit board 8 in a position to sense the passage of the magnet 4, regardless of the side of the wheel on which the housing 1 is mounted. Batteries 10 are provided immediately behind the circuit board 8. The major part of the circuitry is located in an upper region 11 of the circuit board 8.

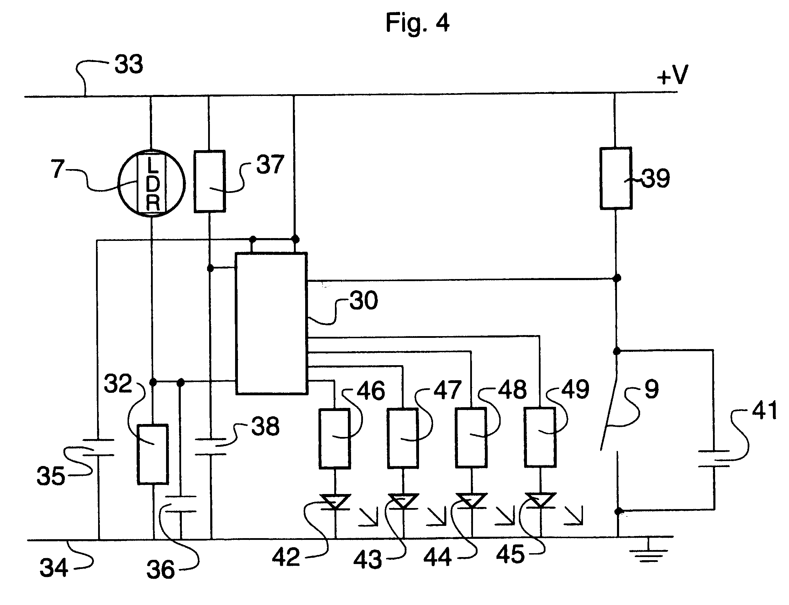

Referring to Figure 4, the circuit mounted to the circuit board 8 (Figure 3), comprises a microcontroller 30, the light-dependent resistor 7 and a first resistor 32 connected in series between the positive supply rail 33 and earth 34, a first capacitor 35 connected between a point near the supply pins of the microcontroller 30 and earth 34, a second capacitor 36 in parallel with the first resistor 32, a second resistor 37 and a third capacitor 38 connected in series between the positive supply rail 33 and earth 34, a third resistor 39 and the reed switches 9 connected in series between the positive supply rail 33 and earth 34, an anti-bounce capacitor 41 connected in parallel with the reed switches 9, and a plurality of red light emitting diodes 42, ...,45 connected to respective output ports of the microcontroller 30 by respective current limiting resistors 46, ...,49. The junction between the third resistor 39 and the reed switches 9 is connected to an interrupt port of the microcontroller 30. The second resistor 37 and the third capacitor 38 set the frequency of the microcontroller's clock. The junction of the light-dependent resistor 7 and the first resistor 32 is connected to an analogue-to-digital converter input of the microcontroller 30.

In Figure 4, only four light emitting diodes are shown in the interests of clarity. However, it will be appreciated that a larger number will be used in practice. Of the light emitting diodes 42, ..., 45, the first and second light emitting diodes 42, 43 will be considered as providing a "tail light" and the third and fourth light emitting diodes 44, 45 will be considered as providing a "brake light".

The operation of the apparatus of Figure 1, will now be described. In the following, it is to be understood that the microcontroller 30 is controlled by internally stored program instructions.

When the apparatus is turned on and the bicycle is not moving, the microcontroller 30 enters a sleep mode. When the bicycle begins to move, the rear wheel begins to rotate and the magnet 4 sweeps past one of the reed switches 9. As the magnet 4 passes one of the reed switches 9, the reed switch 9 closes. The closing of the reed switch 9 pulls the interrupt port of the microcontroller 30 to logic "0". As long as the bicycle remains in motion, the reed switch 9 will repeatedly close and then open, applying a series of logic "0" pulses to interrupt port of the microcontroller 30. The microcontroller 30 recognises the falling edge as the interrupt port goes to logic "0" as an interrupr request.

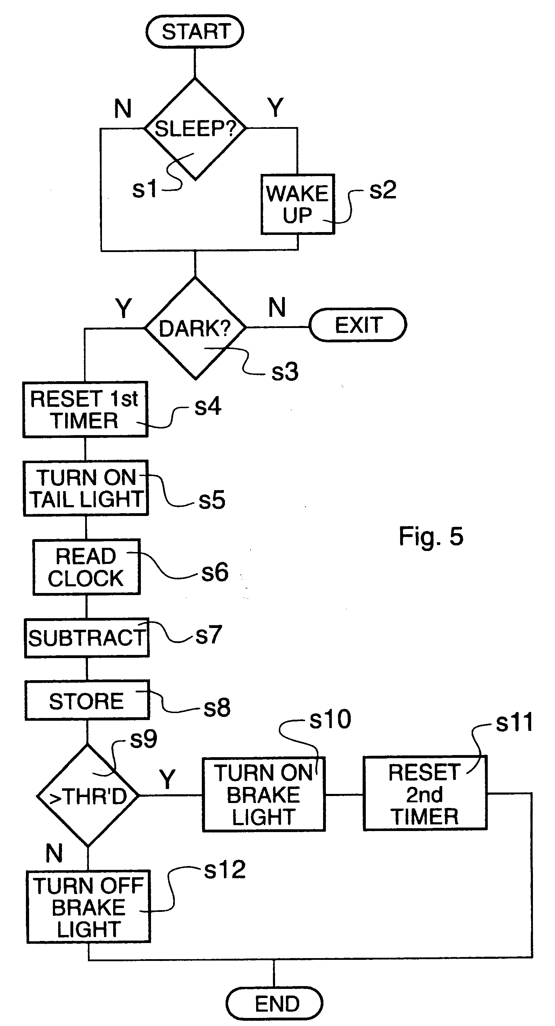

Referring to Figure 5, when an interrupt request is produced by the reed switch 9, the microcontroller 30 first wakes up if it is in sleep mode (steps s1 and s2). Thereafter, the microcontroller 30 compares the signal from the light dependent resistor 7 with a threshold to determine whether the ambient light is sufficiently low for lighting to be necessary (step s3). If the light level is above the threshold level, the microcontroller 30 simply exits the routine.

If the ambient light level is below the threshold, the microcontroller 30 resets a first internal timer (step s4) and then outputs logic "1"s to turn on the first and second light emitting diodes 42, 43 (step s5). The microcontroller 30 then reads an internal clock (step s6), subtracts from it a value stored at a predetermined location (step s7) and then stores the clock value read at step s5 in the predermined location (step s8). If the result of step s7 is greater than a threshold value (step s9), i.e. the bicycle is decelerating at a rate above a predetermined threshold, logic "1"s are output to the third and fourth light emitting diodes 44, 45 (step s10) and a second internal timer is reset (step s11), otherwise logic "0"s are output (step s12). Thus, the third and fourth light emitting diodes are illuminated if the bicycle is decelerating at more than a predetermined rate. The routine is then exited.

The microcontroller 30 will not now return to its sleep mode until the ambient light level rises above the predetermined level or the first internal timer times out. The first internal timer is set to measure about five minutes and then generates an interrupt request. The microcontroller 30 responds to this request by outputting logic "0"s to the first and second light emitting diodes 42, 43. This ensures that the first and second light emitting diodes 42, 43 will remain on for about five minutes after the bicycle has stopped. The second timer is set to time about 10 seconds and, if it times out, an interrupt request is generated causing the microcontroller 30 to output logic "0"s to the third and fourth light emitting diodes 44, 45 to extinguish them after the bicycle has been stationary for about 10 seconds.

In the foregoing, a tail light apparatus has been described. It will be appreciated that a headlamp apparatus may be constructed by omitting the "brake light" features of the above-described embodiment and, preferably, replacing the first and second light emitting diodes with a halogen lamp and a switch for turning the halogen lamp on and off in response to logic "1"s and "0"s output by the microcontroller. A headlamp apparatus would normally be mounted to a front fork member and detect rotation of a front wheel. It will also be appreciated that the present invention can be embodied as a "brake light" only system. Merely removing the first and second light emitting diodes 42, 43 would achieve this. However, modification of the microcontroller's control program would be preferred. In the brake light only embodiment, the sensor need not be a non-contact type and the output of a dynamo could be used to detect deceleration.

## Claims

1. An automatic lighting system for a wheeled vehicle comprising a power supply and a light source (42, 43, 44, 45), **characterised by** a non-contact sensor (4, 9) for sensing rotation of a vehicle wheel and control means (30) for applying power from the power source to the light source (42, 43, 44, 45) in dependence on the output of the sensor (4, 9).

2. A system according to claim 1, including a timer, wherein the control means (30) is configured to be responsive to the timer to maintain the application of power to the light source (42, 43) for a predetermined period after sensing of wheel rotation has stopped.

3. A system according to claim 1 or 2, wherein the control means is configured to apply power to the light source (44, 45) when the output of the sensor (4, 9) indicates reducing wheel rotational speed.

4. A system according to claim 1, 2 or 3, including an ambient light sensor (7), wherein the control means (30) is configured to be responsive to the ambient light sensor (7) to apply power to the light source (42, 43, 44, 45) only when the ambient light level indicated by the ambient light sensor (7) falls below a predetermined level.

5. A system according to any preceding claim, wherein the light source (42, 43, 44, 45) comprises a plurality of light emitting diodes.

6. A system according to any preceding claim, wherein the non-contact sensor (4, 9) comprises a magnetic sensor.

7. A system according to claim 6, wherein the magnetic sensor (4, 9) comprises a permanent magnet (4) and mounting means configured for mounting the permenant magnet to a wheel.

8. A system according to claim 7, wherein the mounting means is configured for mounting the permanent magnet (4) to a spoke (5) of a wire-spoked wheel.

9. A system according to any preceding claim, including a housing (1) containing the power supply, the light source (42, 43, 44, 45), at least part (9) of the non-contact sensor and the control means (30).

10. A system according to claim 9, including fixing means (3) configured for fixing the housing to a fork (2) of a bicycle.

11. A bicycle having mounted thereto a system according to any preceding claim.

12. A method of controlling a light on a wheeled vehicle, **characterised by** monitoring the rotation of a wheel of the vehicle using a non-contact sensor (4, 9) and powering a light (42, 43, 44, 45) on the vehicle if the output of the sensor (4, 9) meets a predetermined criterion.

13. A method according to claim 12, wherein the criterion comprises a signal characteristic of rotation of the wheel.

14. A method according to claim 12 or 13, wherein the criterion or another criterion comprises a signal charateristic of wheel rotation having ceased within a predetermined preceding period.

15. A method according to claim 12, 13 or 14, wherein the criterion comprises a signal characteristic of reducing wheel rotational velocity.

16. An automatic lighting system for a wheeled vehicle comprising a power supply and a light source (42, 43, 44, 45), **characterised by** a sensor (4, 9) for sensing rotation of a vehicle wheel and control means (30) for applying power from the power source to the light source (42, 43, 44, 45) when the output of the sensor (4, 9) indicates reducing wheel rotational speed.
